# EUROPÄISCHE PATENTSCHRIFT

(11) **EP 2 035 718 B1**
(45) Veröffentlichungstag und Bekanntmachung des Hinweises auf die Patenterteilung: **15.06.2016**
(21) Anmeldenummer: 07711184.7
(22) Anmeldetag: 14.02.2007
(51) Int. Cl.: F16C 19/38, F16C 33/60, F16C 41/04

(54) **ZWEIREIHIGES SCHRÄGWÄLZLAGER MIT EINEM GETEILTEN LAGERAUSSENRING UND EINEM EINREIHIGEN LAGERINNENRING**
DOUBLE-ROW ANGULAR CONTACT ANTI-FRICTION BEARING COMPRISING A SPLIT OUTER BEARING RING AND A ONE-PIECE INNER BEARING RING
ROULEMENT À CONTACT OBLIQUE À DEUX RANGÉES COMPRENANT UNE BAGUE EXTÉRIEURE DE ROULEMENT EN DEUX PARTIES ET UNE BAGUE INTÉRIEURE DE ROULEMENT À UNE RANGÉE

(30) Priorität: 24.02.2006 DE 102006008731
(43) Veröffentlichungstag der Anmeldung: 18.03.2009
(73) Patentinhaber: Schaeffler Technologies AG & Co. KG, 91074 Herzogenaurach (DE)
(72) Erfinder: ANSORGE, Ralf, 97497 Dingolshausen (DE); ZEIDLHACK, Rudolf, 97440 Essleben (DE)
(86) Internationale Anmeldenummer: PCT/DE2007/000270
(87) Internationale Veröffentlichungsnummer: WO 2007/095899

(56) Entgegenhaltungen:
- DE-C- 331 985
- DE-U1- 20 200 240
- GB-A- 961 563
- JP-A- 2002 310 175
- JP-A- 2005 140 157
- US-A- 954 529
- US-A- 1 003 055
- US-A1- 2003 094 849

## Beschreibung

### Gebiet der Erfindung

Die Erfindung bezieht sich auf ein zweireihiges Schrägwälzlager mit einem geteilten Lageraußenring und einem einteiligen Lagerinnenring sowie mit einer Anzahl von zwischen den Lagerringen in zwei Reihen nebeneinander auf deren Laufbahnen abrollenden Wälzkörpern, die durch einen Lagerkäfig in gleichmäßigen Abständen zueinander gehalten werden, wobei der Lageraußenring axial geteilt ausgebildet ist und aus zwei Einzelringen besteht, welche durch ein Verbindungselement miteinander verbunden sind, wobei die Einzelringe des Lageraußenringes durch das Verbindungselement formschlüssig und auf Spiel miteinander verbunden sind und wobei Mantelflächen der Einzelringe jeweils wenigstens einen Absatz aufweisen, auf dem das Verbindungselement rittlings aufliegt, wobei wenigstens der Absatz eines Einzelringes eine Nut aufweist, in welche ein Hakenelement des Verbindungselementes formschlüssig eingreift, und wobei die Einzelringe gegeneinander verdrehbar sind.

### Hintergrund der Erfindung

Bei der Herstellung derartiger Schrägwälzlager ist es nach dem Zusammensetzen der einzelnen Bauteile oftmals notwendig, die separaten Lageraußenringe miteinander zu verbinden bzw. zumindest zu sichern, um bei Transport, Handhabung und Montage der Schrägwälzlager ein Auseinanderfallen des Lagers zu verhindern. Störungen bei der Montage, insbesondere die Verschmutzung heraus gefallener Lagerbauteile sowie Beschädigung der Lagerdichtungen könnten andernfalls die Folge sein.

Bei Schrägwalzlagern mit einteiligem Lageraußenring und geteiltem Lagerinnenring ist es bereits bekannt, zur Sicherung der Lagerinnenringe spezielle Klammerringe einzusetzen, die radial außen beispielsweise mit federnd nachgiebigen Vorsprüngen versehen sind, welche in formkorrespondierende, radial innen an den beiden Lagerinnenringen angeordnete Aussparungen bzw. Hinterschneidungen eingerastet werden können. Auf diese Weise erfolgt eine gegenseitige Fixierung und Vorspannung der beiden Lagerinnenringe in axialer Richtung.

Derartige Klammerringe sind im praktischen Einsatz jedoch nicht unproblematisch und erfordern zudem spezielle Ausdrehungen bzw. Hinterschneidungen auf den Innenseiten der Lagerinnenringe, um dort durch Einrasten ihrer radialen Vorsprünge formschlüssig zur Anlage kommen zu können. Beim Einsatz derartiger Klammerringe besteht immer noch die Gefahr, dass die Ringe beim Einbau oder beim Transport der Schrägwälzlager beschädigt, verbogen oder gar aus ihrer Verankerung in den Hinterschneidungen der Lagerinnenringe herausgedrückt werden, welches bereits durch anfängliches leichtes Verkanten der Schrägwälzlager gegenüber dem Einbauort hervorgerufen werden kann. Daher besteht die Gefahr, dass die Sicherungswirkung derartiger Feder- bzw. Klammerringe verloren gehen kann, was zu einer Beschädigung der Schrägwälzlager führt.

Aus der DE 592 247 C ist ein zweireihiges Schrägwälzlager mit einem geteilten Lageraußenring und einem einteiligen Lagerinnenring bekannt, dessen Lageraußenring aus zwei Einzelringen besteht, zwischen denen ein aus zwei Halbringgliedern bestehender Distanzring angeordnet ist. Die Halbringglieder sind mittels eines Ringflansches mit den Außenringen verbunden, wobei der Ringflansch in eine korrespondierende Ausnehmung in einer Innenkante nur eines Außenringes eingreift, wodurch radiale Bewegungen des Distanzringes verhindert werden sollen. Eine Verbindung der Einzelringe durch den Distanzring wird in der DE 592 247 C nicht beschrieben.

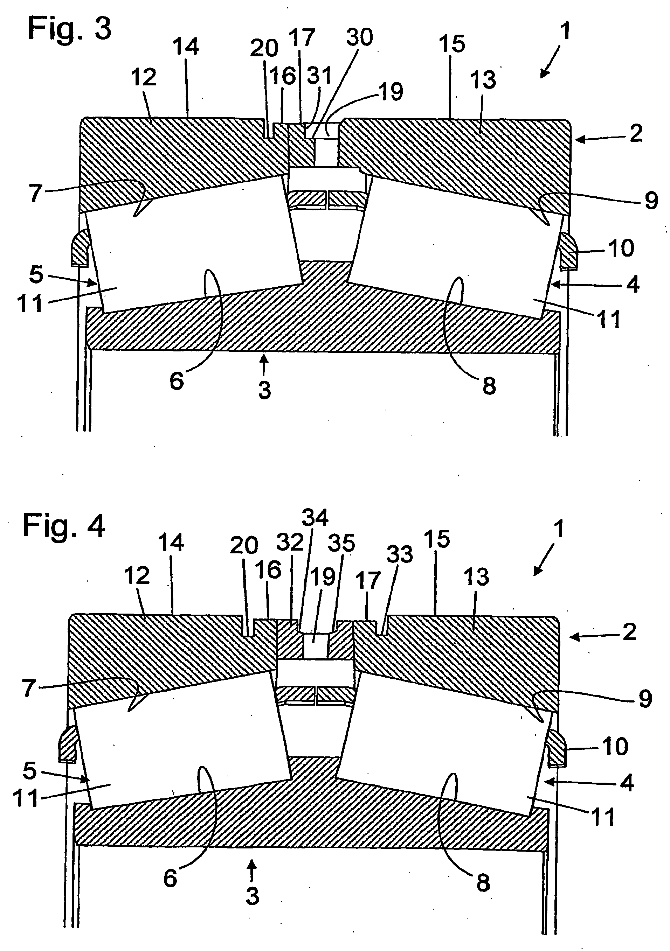

Aus der DE 36 21 381 A1 ist ein zweireihiges Schrägwälzlager bekannt, bei dem sowohl die Außenringe, als auch die Innenringe geteilt sind und jeweils aus Einzelringen bestehen. In einer Ausführungsform gemäß der dortigen Figur 3 sind die beiden Einzelringe des Außenringes durch eine Klammer miteinander verbunden, während zwischen den Einzelringen des Innenringes ein Distanzring angeordnet ist.

Die DE 10 2004 018 188 A1 beschreibt ein zweireihiges Schrägwälzlager in X- oder O-Anordnung mit einem geteilten Lagerinnenring und einem einteiligen Lageraußenring, wobei der Lagerinnenring axial geteilt ausgebildet ist kraft- oder stoffschlüssig miteinander verbunden sind. Dieses gleichzeitig als Distanzring dienende Verbindungselement wird zur Erzeugung einer dauerhaften axialen Vorspannung eingesetzt und ist mit den Lagerinnenringen untrennbar verbunden, beispielsweise durch eine Klebverbindung.

Aus der DE 202 00 240 U1 ist ebenfalls ein zweireihiges Schrägwälzlager mit einem geteilten Lagerinnenring und einem einteiligen Lageraußenring bekannt, dessen beide Einzelringe des Lagerinnenringes durch ein Verbindungselement derart miteinander verbunden sind, dass das Verbindungselement mit einem Einzelring auf Presspassung und mit dem anderen Einzelring auf Spielpassung verbunden ist.

Während die Verbindung von geteilten Lagerinnenringen relativ unproblematisch ist, bereitet die Verbindung von Lageraußenringen bislang Probleme. Dies liegt unter anderem daran, dass der Fachmann zur Verbindung geteilter Lageraußenringe Lösungen bevorzugt hat, die auf einen möglichst festen, kraftschlüssigen Verbund abzielen, da dieser eine gleichzeitige Vorspannung des Schrägwälzlagers ermöglicht, so dass das Schrägwälzlager mit bereits voreingestellter Vorspannung montiert werden kann.

Aus der US 954 529 A und der US 1 003 055 A sind jeweils Kegelrollenlager mit in zwei Einzelringe geteilten Außenringen bekannt, wobei die jeweiligen Einzelringe über Verschraubungen fest, insbesondere verdrehsicher, miteinander verbunden sind.

Aus der gattungsbildenden JP 2005 140 157 A ist ein Kegelrollenlager mit in zwei Einzelringe geteiltem Außenring bekannt, wobei die zwei Einzelringe mit einem Verbindungselement zusammenwirken, welches über Vorsprünge in Nuten der Außenringe eingreift.

### Aufgabe der Erfindung

Der Erfindung liegt die Aufgabe zugrunde, ein zweireihiges Schrägwälzlager mit einem geteilten Lageraußenring und einem einteiligen Lagerinnenring zu schaffen, welches die Nachteile des Standes der Technik vermeidet und dessen den Lageraußenring bildende Einzelringe derart miteinander verbunden sind, dass diese bei Transport und Montage des Schrägwälzlagers sicher zusammengehalten werden sowie ein Verdrehen der Außenringteile gegeneinander möglich ist.

### Zusammenfassung der Erfindung

Der Erfindung liegt die Erkenntnis zugrunde, dass sich die gestellte Aufgabe auf überraschend einfache Art und Weise dadurch lösen lässt, dass das Verbindungselement an einer seiner Kanten oder an seinen Kanten mit einer Mehrzahl von Gewindebohrungen versehen ist, in welche Schraubbolzen eingeschraubt sind, wobei die Schraubbolzen wenigstens mit einem Einzelring formschlüssig verbunden sind.

Die Erfindung geht daher aus von einem zweireihigen Schrägwälzlager mit einem geteilten Lageraußenring und einem einteiligen Lagerinnenring sowie mit einer Anzahl von zwischen den Lagerringen in zwei Reihen nebeneinander auf deren Laufbahnen abrollenden Wälzkörpern, die durch einen Lagerkäfig in gleichmäßigen Abständen zueinander gehalten werden, wobei der Lageraußenring axial geteilt ausgebildet ist und aus zwei Einzelringen besteht, welche durch ein Verbindungselement miteinander verbunden sind. Zudem ist vorgesehen, dass die Einzelringe des Lageraußenringes durch das Verbindungselement formschlüssig und auf Spiel miteinander verbunden sind, wobei Mantelflächen der Einzelringe jeweils wenigstens einen Absatz aufweisen, auf dem das Verbindungselement rittlings aufliegt, wobei wenigstens der Absatz eines Einzelringes eine Nut aufweist, in welche ein Hakenelement des Verbindungselementes formschlüssig eingreift, und wobei die Einzelringe gegeneinander verdrehbar sind. Weiterhin ist vorgesehen, dass das Verbindungselement an einer seiner Kanten oder an seinen Kanten mit einer Mehrzahl von Gewindebohrungen versehen ist, in welche Schraubbolzen eingeschraubt sind, wobei die Schraubbolzen wenigstens mit einem Einzelring formschlüssig verbunden sind.

Durch diesen Aufbau wird vorteilhaft erreicht, dass die Einzelringe des Lageraußenringes vergleichsweise locker aber dennoch sicher miteinander verbunden sind. Diese Ausgestaltung ermöglicht überraschende Effekte. Der Erfinder hat sich bewusst von bislang bekannten Lösungen abgewandt, welche auf eine Vorspannung des Schrägwälzlagers insbesondere durch das Verbindungselement abzielten. Nunmehr weisen die ausreichend sicher miteinander verbundenen Einzelringe des Lageraußenringes ein gewisses Maß an axialem und/oder radialem Spiel auf, welches ganz bewusst in Kauf genommen wird. Denn dadurch, dass sich die Einzelringe gegeneinander verdrehen lassen, können Setzerscheinungen der Wälzköper beim Transport, bei dem es zu Verkantungen des Schrägwälzlagers kommen kann, vermieden werden. Die Rotationsfreiheit der Einzelringe des Lageraußenringes bewirkt ein gewisses Maß an Selbstjustierung der Wälzkörper. Ferner wird erreicht, dass das Schrägwälzlager beim Einbau axial durchgespannt werden kann, da das formschlüssig mit den Einzelringen des Lageraußenringes verbundene Verbindungselement dies ebenfalls zulässt.

Außerdem kann vorgesehen sein, dass das Verbindungselement mit einem Einzelring kraftschlüssig und mit dem jeweils anderen Einzelring formschlüssig verbunden ist.

In anderen praktischen Weiterbildungen kann vorgesehen sein, dass die Breite wenigstens einer Nut größer ist als der Durchmesser des Hakenelements.

Andere praktische Ausgestaltungen der Erfindung zeichnen sich dadurch aus, dass die radiale Oberseite des Verbindungselementes radial tiefer als die äußeren Mantelflächen der Einzelringe angeordnet ist. Alternativ dazu kann vorgesehen sein, dass die radiale Oberseite des Verbindungselementes mit den Mantelflächen der Einzelringe fluchtet.

Ferner kann gemäß weiteren Ausgestaltungen vorgesehen sein, dass das Verbindungselement als ein einteiliger oder geteilter Ring ausgebildet ist. Alternativ dazu ist es auch möglich, dass das Verbindungselement aus einer Mehrzahl von Riegeln besteht, welche jeweils formschlüssig mit den Einzelringen verbunden sind.

In einer vorteilhaften Weiterbildung kann vorgesehen sein, dass das Hakenelement als nach radial innen ragender Rand oder als Schraubbolzen ausgebildet ist.

In einer besonders praktischen Variante der Erfindung ist vorgesehen, dass das Verbindungselement als Distanzelement ausgeführt ist, derart, dass durch das formschlüssig mit den Einzelringen verbundene Verbindungselement ein axialer Abstand zwischen den Einzelringen hergestellt ist.

Eine andere vorteilhafte Ergänzung der Erfindung zeichnet sich dadurch aus, dass beide Einzelringe des Lageraußenrings symmetrisch ausgebildet sind, so dass in den Absatz eines Einzelringes eine Nut entsprechend der Nut des anderen Einzelringes eingefräst ist.

In einer besonders bevorzugten Ausgestaltung der Erfindung ist vorgesehen, dass die Nut eines Einzelringes axial breiter ist als die Nut des anderen Einzelringes des Lageraußenrings.

In einer weiteren Ausgestaltung der Erfindung ist vorgesehen, dass zwischen den Einzelringen des Lageraußenrings ein Distanzring angeordnet ist.

Besonders vorteilhaft ist schließlich eine Ausgestaltung der Erfindung, die sich dadurch auszeichnet, dass das Schrägwälzlager als Kegelrollenlager ausgebildet ist und als Festlager einer Rotorhauptlagerung einer Windkraftanlage verwendbar ist.

### Kurze Beschreibung der Zeichnungen

Die Erfindung wird im Folgenden anhand der beiliegenden Zeichnungen an einigen Ausführungsformen näher erläutert. Darin zeigt
Fig. 1 ein erstes Ausführungsbeispiel eines erfindungsgemäßen Schrägwälzlagers im Querschnitt,
Fig. 2 ein zweites Ausführungsbeispiel eines Schrägwälzlagers gemäß der Erfindung im Querschnitt,
Fig. 3 ein drittes Ausführungsbeispiel eines erfindungsgemäßen Schrägwälzlagers im Querschnitt,
Fig. 4 ein viertes Ausführungsbeispiel eines Schrägwälzlagers gemäß der Erfindung im Querschnitt, und
Fig. 5 ein fünftes Ausführungsbeispiel eines erfindungsgemäßen Schrägwälzlagers im Querschnitt.

### Detaillierte Beschreibung der Zeichnungen

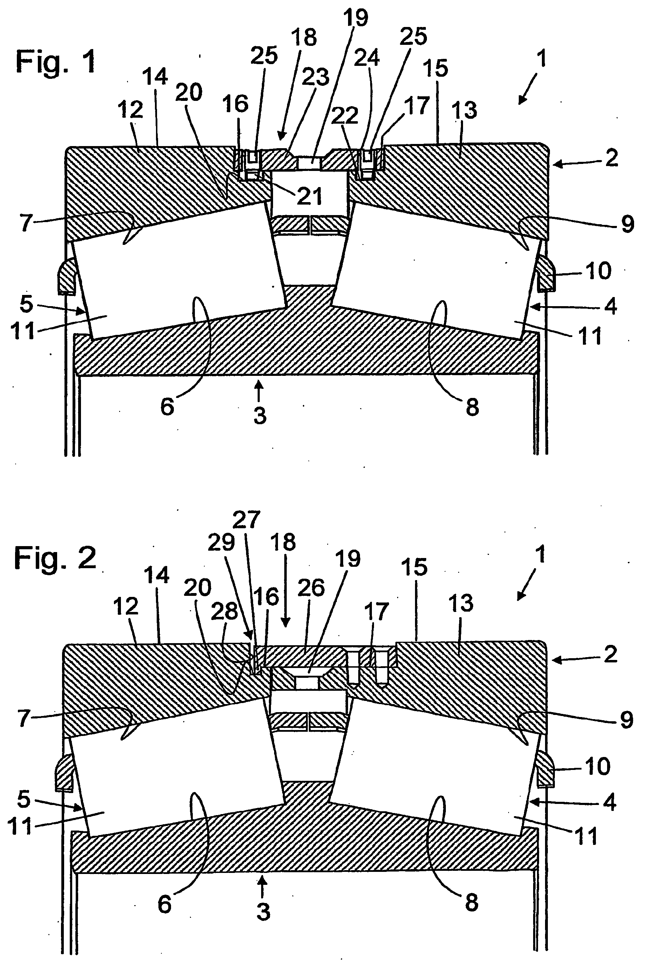

In den Figuren 1 bis 5 ist jeweils ein zweireihiges Schrägwälzlager dargestellt, das als Kegelrollenlager 1 in X-Anordnung ausgebildet und beispielsweise als Festlager einer Rotorhauptlagerung einer Windkraftanlage vorgesehen ist.

Das Kegelrollenlager 1 besteht im Wesentlichen aus einem Lageraußenring 2 und einem Lagerinnenring 3 sowie aus einer Anzahl von zwischen den Lagerringen 2 und 3 in zwei Reihen 4, 5 nebeneinander auf deren Laufbahnen 6, 7, 8, 9 abrollenden Wälzkörpern 11, die durch einen Lagerkäfig 10 in gleichmäßigen Abständen zueinander gehalten werden. Der Lagerinnenring 3 des Kegelrollenlagers 1 ist dabei einteilig ausgebildet, während der Lageraußenring 2 in zwei Einzelringe 12 und 13 axial geteilt ausgebildet ist.

Die Einzelringe 12 und 13 des Lageraußenringes 3 weisen jeweils am äußeren Randbereich ihrer Mantelflächen 14, 15 einen stufenförmigen Absatz 16, 17 auf, auf denen ein Verbindungselement 18 rittlings aufliegt. Ferner weisen alle Wälzlager in den Ausführungsbeispielen eine Schmierbohrung 19 auf. In den Absatz 16 des linken Einzelringes 12 ist jeweils eine radial nach innen weisende Nut 20 eingefräst, welche als Widerlager für das Verbindungselement 18 dient. In diese Nut 20 greift jeweils ein Hakenelement 21 des Verbindungselements 18 ein.

Im ersten Ausführungsbeispiel gemäß Fig. 1 sind beide Einzelringe 12, 13 symmetrisch ausgebildet, so dass auch in den Absatz 17 eine Nut 22 entsprechend der Nut 20 eingefräst ist. Das Verbindungselement 18 gemäß Fig. 1 ist als ein einteiliger oder geteilter Ring 23 ausgebildet, welcher an seinen Kanten mit jeweils einer Mehrzahl von Gewindebohrungen 24 versehen ist, in welche Schraubbolzen 25 eingeschraubt sind. Die Schraubbolzen 25 dienen jeweils der formschlüssigen Verbindung des Ringes 23 mit den beiden Einzelringen 12, 13 des zweiteiligen Lageraußenringes 2, so dass es hier nur auf das untere Ende des Schraubbolzens 25 ankommt, der jeweils als Hakenelement 21 dient. Dabei kann die Breite der Nuten 20 und 22 größer sein als der Durchmesser des Schraubbolzens 25, so dass ein leichtes axiales Spiel entsteht.

Durch dieses axiale Spiel lassen sich die Einzelringe 12 und 13 des Lageraußenringes 2 um einige Millimeter nach links oder rechts bewegen, welches dem späteren Einbau des Schrägwälzlager zugute kommt, eine wirksame Sicherung gegen ein Abfallen der Einzelringe 12, 13 vom Schrägwälzlagers beim Transport aber trotzdem zulässt. Die Schraubbolzen 25 sind jeweils nur lose in den Nuten 20, 22 angeordnet. Es ist jedoch auch möglich, zumindest eine Reihe von Schraubbolzen 25 fest in die Nut 20 oder in die Nut 22 einzuschrauben. Ebenso kann statt des Ringes 23 eine Anzahl von einzelnen Riegeln verwendet werden, welche dann jeweils mit einem der Einzelringe 12, 13 verschraubt wären.

Die radiale Oberseite des Verbindungselementes 18 liegt radial etwas tiefer als die Mantelflächen 14 und 15 des Lageraußenringes 2. Es ist jedoch auch möglich, dass die Oberseite des Verbindungselementes 18 mit den Mantelflächen 14 und 15 fluchtet. Wichtig ist jedoch, dass das Verbindungselement 18 die Mantelflächen 14, 15 radial nicht überragt, damit ein Einbau des Schrägwälzlagers nicht erschwert wird.

Die beiden Einzelringe 12 und 13 des Lageraußenringes 2 stoßen mit ihren axial inneren Stirnkanten nicht aneinander an, sondern weisen einen Abstand zueinander auf, der durch das Verbindungselement 18 hergestellt ist. Das Verbindungselement 18 übernimmt also bei der Ausführungsform gemäß Fig. 1 auch die Funktion eines Distanzkörpers oder Distanzringes.

In Fig. 2 ist eine ähnliche Lösung dargestellt, bei der nur der Einzelring 12 mit der Nut 20 im Absatz 16 versehen ist. Das Verbindungselement 18 besteht aus einer Mehrzahl, deren Anzahl beispielsweise drei beträgt, von Riegeln 26, die jeweils auf einer Seite auf dem Absatz 17 des Einzelringes 13 aufliegen und mittels Schraubbolzen kraftschlüssig mit dem Einzelring verbunden sind.

Die andere Seite des Riegels 26 ist mit einem nach radial innen ragenden Rand 27 versehen, welcher in die Nut 20 des Einzelringes 12 eingreift. Zwischen Rand 27 und einer Absatzkante 28 des Einzelringes 12 verbleibt ein Spalt 29, durch welchen das Axialspiel gewährleistet ist. Ferner ist es durch den nur formschlüssig mit dem Einzelring 12 verbundenen Riegel 26 möglich, die beiden Einzelringe 12 und 13 gegeneinander zu verdrehen. Statt einer Mehrzahl einzelner Riegel 26 ist es bei der Ausführungsform gemäß Fig. 2 auch möglich, einen Ring ähnlich dem Ring 23 aus Fig. 1 zu verwenden.

In den Figuren 3 bis 5 sind drei weitere Ausführungsformen eines erfindungsgemäßen Schrägwälzlagers dargestellt, wobei dort das Verbindungselement 18 jeweils nicht dargestellt ist. Bei diesen Ausführungsformen kann ein Verbindungselement verwendet werden, das dem in Fig. 1 verwendeten Ring 23 mit Schraubbolzen 25, oder dem in Fig. 2 dargestellten Riegel 26 entspricht. Möglich ist auch, nicht erfindungsgemäße Klammerringe mit U-Profil mit an den Außenkanten nach radial innen abgewinkelten Rändern zu verwenden, welche in noch zu beschreibende Nuten eingreifen.

In Fig. 3 weist der Einzelring 12 eine Nut 20 auf, in welche das Hakenelement 21 des Verbindungselementes 18 formschlüssig eingebracht werden kann. Der Einzelring 13 ist ähnlich der Ausführungsform gemäß Fig. 2 gegenüber dem Einzelring 12 axial länger. Eine Nut 30 ist in den Absatz 17 so eingebracht, dass diese einen möglichst geringen Abstand zur Nut 20 des Einzelringes 12 aufweist. Ein nicht dargestelltes Verbindungselement, das mit Hakenelementen in die Nuten 20 und 30 eingreift, ist entsprechend schmal bezüglich der axialen Breite. Der Abstand des Hakenelementes zur Nutwandung 31 bestimmt das Maß des axialen Spiels der Einzelringe 12 und 13 zueinander, so dass sich durch diesen Abstand das Axialspiel einstellen lässt.

In Fig. 4 ist eine Ausführungsform des Schrägwälzlagers dargestellt, bei welcher zwischen den Einzelringen 12 und 13 des Lageraußenrings 2 ein Distanzring 32 angeordnet ist. Ein nicht dargestelltes Verbindungselement greift mit seinen Hakenelementen in die Nut 20 des Einzelringes 12 sowie in eine Nut 33 im Absatz 17 des Einzelringes 13 ein und verbindet auf diese Weise die beiden Einzelringe 12, 13. Möglich ist aber auch die nicht erfindungsgemäße Verwendung von zwei Verbindungselementen. Hierbei greift ein erstes Verbindungselement in die Nut 20 und in eine Nut 34 des Distanzringes 32 ein, während ein zweites Verbindungselement, beispielsweise ein aus Stahl bestehender Klammerring, in die Nut 33 des Einzelringes 13 und in eine Nut 35 des Distanzringes 32 eingreift.

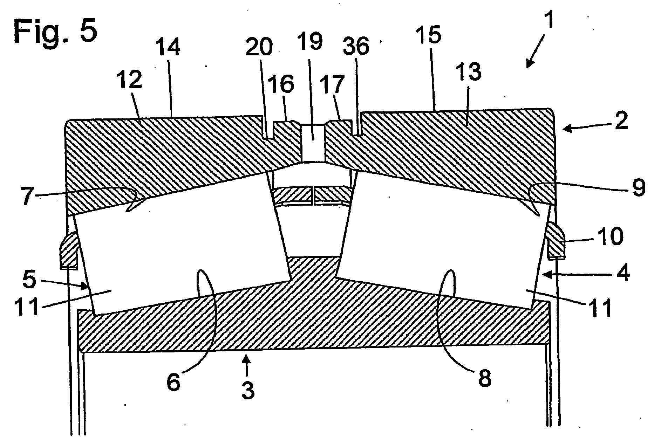

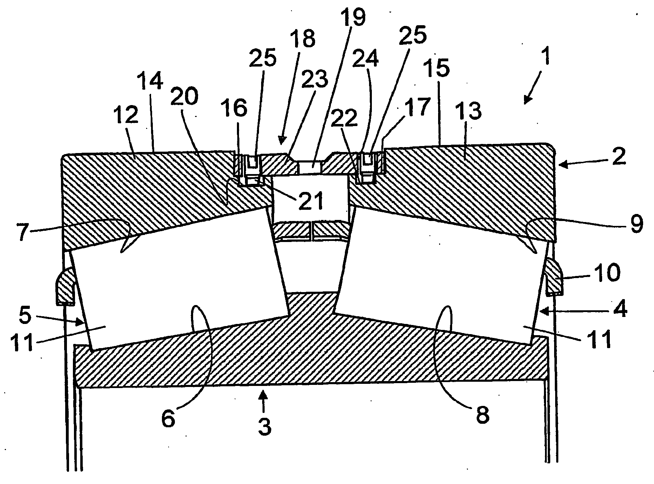

In Fig. 5 ist ein fünftes Ausführungsbeispiel eines Schrägwälzlager dargestellt, welches wie das Kegelrollenlager 1 aus Fig. 4 eine Nut 20 im Absatz 16 des Einzelringes 12 aufweist, wobei die beiden Einzelringe 12 und 13 symmetrisch ausgebildet sind, so dass auch der Einzelring 13 einen Absatz 17 mit einer Nut 36 aufweist. In die Nuten 20 und 36 greift jeweils ein Hakenelement eines hier nicht dargestellten Verbindungselementes ein, wodurch beide Einzelringe 12 und 13 miteinander verbunden und gesichert sind. Die Nut 20 ist dabei etwas breiter ausgestaltet als die Nut 36, so dass ein leichtes axiales Spiel und eine Verdrehbarkeit der Einzelringe 12, 13 gegeneinander ermöglicht werden.

Lediglich erwähnt werden soll noch, dass die beschriebenen Ausführungsformen des erfindungsgemäßen Schrägwälzlagers nur beispielhaft sind, und dass die erfindungsgemäße Ausbildung sinngemäß auch an zweireihigen Kegelrollenlagern in O-Anordnung oder auch an Lagereinheiten aus zwei oder mehreren Lagern jedmöglicher Bauart realisierbar ist.

### Bezugszeichenliste

- 1: Kegelrollenlager
- 2: Lageraußenring
- 3: Lagerinnenring
- 4: Reihe
- 5: Reihe
- 6: Laufbahn
- 7: Laufbahn
- 8: Laufbahn
- 9: Laufbahn
- 10: Lagerkäfig
- 11: Wälzkörper
- 12: Einzelring
- 13: Einzelring
- 14: Mantelfläche
- 15: Mantelfläche
- 16: Absatz
- 17: Absatz
- 18: Verbindungselement
- 19: Schmierbohrung
- 20: Nut
- 21: Hakenelement
- 22: Nut
- 23: Ring
- 24: Gewindebohrung
- 25: Schraubbolzen
- 26: Riegel
- 27: Rand
- 28: Absatzkante
- 29: Spalt
- 30: Nut
- 31: Nutwandung
- 32: Distanzring
- 33: Nut
- 34: Nut
- 35: Nut
- 36: Nut

## Patentansprüche

1. Zweireihiges Schrägwälzlager (1) mit einem geteilten Lageraußenring (2) und einem einteiligen Lagerinnenring (3) sowie mit einer Anzahl von zwischen den Lagerringen (2, 3) in zwei Reihen (4, 5) nebeneinander auf deren Laufbahnen (6, 7, 8, 9) abrollenden Wälzkörpern (11), die durch einen Lagerkäfig (10) in gleichmäßigen Abständen zueinander gehalten werden, wobei der Lageraußenring (2) axial geteilt ausgebildet ist und aus zwei Einzelringen (12, 13) besteht, welche durch ein Verbindungselement (18) miteinander verbunden sind, wobei die Einzelringe (12, 13) des Lageraußenringes (2) durch das Verbindungselement (18) formschlüssig und auf Spiel miteinander verbunden sind und wobei Mantelflächen (14, 15) der Einzelringe (12, 13) jeweils wenigstens einen Absatz (16, 17) aufweisen, auf dem das Verbindungselement (18) rittlings aufliegt, wobei wenigstens der Absatz (16, 17) eines Einzelringes (12, 13) eine Nut (20, 22, 30, 33, 36) aufweist, in welche ein Hakenelement (21, 27) des Verbindungselementes (18) formschlüssig eingreift, und wobei die Einzelringe (12, 13) gegeneinander verdrehbar sind, **dadurch gekennzeichnet, dass** das Verbindungselement (18) an einer seiner Kanten oder an seinen Kanten mit einer Mehrzahl von Gewindebohrungen (24) versehen ist, in welche Schraubbolzen (25) eingeschraubt sind, wobei die Schraubbolzen (25) wenigstens mit einem Einzelring (12, 13) formschlüssig verbunden sind.

2. Schrägwälzlager nach Anspruch 1, **dadurch gekennzeichnet, dass** das Verbindungselement (18) mit einem Einzelring (12, 13) kraftschlüssig und mit dem jeweils anderen Einzelring (12, 13) formschlüssig verbunden ist.

3. Schrägwälzlager nach Anspruch 1 oder 2, **dadurch gekennzeichnet, dass** die Breite wenigstens einer Nut (20, 22, 30, 33, 36) größer ist als der Durchmesser des Hakenelements (21, 27).

4. Schrägwälzlager wenigstens nach Anspruch 1, **dadurch gekennzeichnet, dass** die radiale Oberseite des Verbindungselementes (18) radial tiefer als die Mantelflächen (14, 15) der Einzelringe (12, 13) angeordnet ist.

5. Schrägwälzlager wenigstens nach Anspruch 1, **dadurch gekennzeichnet, dass** die radiale Oberseite des Verbindungselementes (18) mit den Mantelflächen (14, 15) der Einzelringe (12, 13) fluchtet.

6. Schrägwälzlager wenigstens nach Anspruch 1, **dadurch gekennzeichnet, dass** das Verbindungselement (18) als ein einteiliger oder geteilter Ring (23) ausgebildet ist.

7. Schrägwälzlager nach wenigstens einem der Ansprüche 1 bis 5, **dadurch gekennzeichnet, dass** das Verbindungselement (18) aus einer Mehrzahl von Riegeln (26) besteht, welche jeweils formschlüssig mit den Einzelringen (12, 13) verbunden sind.

8. Schrägwälzlager wenigstens nach Anspruch 1, **dadurch gekennzeichnet, dass** das Hakenelement (21) als nach radial innen ragender Rand (27) oder als Schraubbolzen (25) ausgebildet ist.

9. Schrägwälzlager wenigstens nach Anspruch 1, **dadurch gekennzeichnet, dass** das Verbindungselement (18) als Distanzelement ausgeführt ist, derart, dass durch das formschlüssig mit den Einzelringen (12, 13) verbundene Verbindungselement (18) ein axialer Abstand zwischen den Einzelringen (12, 13) hergestellt ist.

10. Schrägwälzlager wenigstens nach Anspruch 1, **dadurch gekennzeichnet, dass** beide Einzelringe (12, 13) symmetrisch ausgebildet sind, so dass in den Absatz (16, 17) eines Einzelringes (12, 13) eine Nut (20, 22, 30, 33, 36) entsprechend der Nut (20, 22, 30, 33, 36) des anderen Einzelringes (12, 13) eingefräst ist.

11. Schrägwälzlager wenigstens nach Anspruch 1, **dadurch gekennzeichnet, dass** die Nut (20, 22, 30, 33, 36) eines Einzelringes (12, 13) axial breiter ist als die Nut (20, 22, 30, 33, 36) des anderen Einzelringes (12, 13).

12. Schrägwälzlager wenigstens nach Anspruch 1, **dadurch gekennzeichnet, dass** zwischen den Einzelringen (12, 13) des Lageraußenrings (2) ein Distanzring (32) angeordnet ist.

13. Schrägwälzlager wenigstens nach Anspruch 1, **dadurch gekennzeichnet, dass** das Schrägwälzlager als Kegelrollenlager (1) ausgebildet ist und als Festlager einer Rotorhauptlagerung einer Windkraftanlage verwendbar ist.

## Claims

1. Double-row angular contact anti-friction bearing (1), comprising a split outer bearing ring (2) and a one-piece inner bearing ring (3), and having a number of roller bodies (11) which roll between the bearing rings (2, 3) in two rows (4, 5) one next to the other on their raceways (6, 7, 8, 9) and are held at uniform distances from one another by means of a bearing cage (10), wherein the outer bearing ring (2) is of axially split design and is composed of two individual rings (12, 13) which are connected to one another by means of a connecting element (18), wherein the individual rings (12, 13) of the outer bearing ring (2) are connected to one another with a positive fit and with play by means of the connecting element (18) and wherein lateral surfaces (14, 15) of the individual rings (12, 13) each have at least one shoulder (16, 17) astride which the connecting element (18) is supported, wherein at least the shoulder (16, 17) of an individual ring (12, 13) has a groove (20, 22, 30, 33, 36) in which a hook element (21, 27) of the connecting element (18) engages with a positive fit, and wherein the individual rings (12, 13) can be rotated in relation to one another, **characterized in that** the connecting element (18) is provided at one of its edges or at its edges with a plurality of threaded bores (24) into which the threaded bolts (25) are screwed, wherein the threaded bolts (25) are connected at least to an individual ring (12, 13) with a positive fit.

2. Angular contact anti-friction bearing according to Claim 1, **characterized in that** the connecting element (18) is connected with a force fit to one individual ring (12, 13) and with a positive fit to the respective other individual ring (12, 13).

3. Angular contact anti-friction bearing according to Claim 1 or 2, **characterized in that** the width of at least one groove (20, 22, 30, 33, 36) is greater than the diameter of the hook element (21, 27).

4. Angular contact anti-friction bearing according to at least Claim 1, **characterized in that** the radial upper side of the connecting element (18) is arranged radially lower than the lateral surfaces (14, 15) of the individual rings (12, 13).

5. Angular contact anti-friction bearing according to at least Claim 1, **characterized in that** the radial upper side of the connecting element (18) is aligned with the lateral surfaces (14, 15) of the individual rings (12, 13).

6. Angular contact anti-friction bearing according to at least Claim 1, **characterized in that** the connecting element (18) is embodied as a one-piece ring (23) or as a split ring (23).

7. Angular contact anti-friction bearing according to at least one of Claims 1 to 5, **characterized in that** the connecting element (18) is composed of a plurality of bolts (26) which are each connected with a positive fit to the individual rings (12, 13).

8. Angular contact anti-friction bearing according to at least Claim 1, **characterized in that** the hook element (21) is embodied as a radially inwardly projecting rim (27) or as a threaded bolt (25).

9. Angular contact anti-friction bearing according to at least Claim 1, **characterized in that** the connecting element (18) is embodied as a spacer element in such a way that an axial distance is produced between the individual rings (12, 13) by means of the connecting element (18) which is connected to the individual rings (12, 13) with a positive fit.

10. Angular contact anti-friction bearing according to at least Claim 1, **characterized in that** the two individual rings (12, 13) are of symmetrical design with the result that the shoulder (16, 17) of one individual ring (12, 13) has milled into it a groove (20, 22, 30, 33, 36) which corresponds to the groove (20, 22, 30, 33, 36) in the other individual ring (12, 13).

11. Angular contact anti-friction bearing according to at least Claim 1, **characterized in that** the groove (20, 22, 30, 33, 36) in one individual ring (12, 13) is axially wider than the groove (20, 22, 30, 33, 36) in the other individual ring (12, 13).

12. Angular contact anti-friction bearing according to at least Claim 1, **characterized in that** a spacer ring (32) is arranged between the individual rings (12, 13) of the outer bearing ring (2).

13. Angular contact anti-friction bearing according to at least Claim 1, **characterized in that** the angular contact anti-friction bearing is embodied as a tapered roller bearing (1) and may be used as a fixed bearing for a main bearing of a rotor of a wind power installation.

## Revendications

1. Palier à roulement à contact oblique à deux rangées (1) comprenant une bague de palier extérieure divisée (2) et une bague de palier intérieure d'une seule pièce (3) ainsi qu'un certain nombre de corps de roulement (11) roulant entre les bagues de palier (2, 3)dans deux rangées (4, 5) les uns à côté des autres sur leurs chemins de roulement (6, 7, 8, 9), lesquels sont maintenus à distances régulières les uns des autres par une cage de palier (10), la bague de palier extérieure (2) étant réalisée de manière divisée axialement et se composant de deux bagues individuelles (12, 13) qui sont connectées l'une à l'autre par un élément de connexion (18), les bagues individuelles (12, 13) de la bague de palier extérieure (2) étant connectées l'une à l'autre par l'élément de connexion (18) par engagement par correspondance de formes et avec jeu et des surfaces d'enveloppe (14, 15) des bagues individuelles (12, 13) présentant à chaque fois au moins un épaulement (16, 17), chevauché par l'élément de connexion (18), au moins l'épaulement (16, 17) d'une bague individuelle (12, 13) présentant une rainure (20, 22, 30, 33, 36) dans laquelle s'engage par engagement par correspondance de formes un élément de crochet (21, 27) de l'élément de connexion (18), et les bagues individuelles (12, 13) pouvant tourner l'une par rapport à l'autre, **caractérisé en ce que** l'élément de connexion (18) est pourvu, au niveau de l'une de ses arêtes, ou au niveau de ses arêtes, d'une pluralité d'alésages filetés (24) dans lesquels sont vissés des boulons filetés (25), les boulons filetés (25) étant connectés par engagement par correspondance de formes au moins à une bague individuelle (12, 13).

2. Palier à roulement à contact oblique selon la revendication 1, **caractérisé en ce que** l'élément de connexion (18) est connecté par engagement par force à une bague individuelle (12, 13) et par engagement par correspondance de formes avec l'autre bague individuelle respective (12, 13).

3. Palier à roulement à contact oblique selon la revendication 1 ou 2, **caractérisé en ce que** la largeur d'au moins une rainure (20, 22, 30, 33, 36) est supérieure au diamètre de l'élément de crochet (21, 27).

4. Palier à roulement à contact oblique selon au moins la revendication 1, **caractérisé en ce que** le côté supérieur radial de l'élément de connexion (18) est disposé radialement plus profondément que les surfaces d'enveloppe (14, 15) des bagues individuelles (12, 13).

5. Palier à roulement à contact oblique selon au moins la revendication 1, **caractérisé en ce que** le côté supérieur radial de l'élément de connexion (18) est aligné avec les surfaces d'enveloppe (14, 15) des bagues individuelles (12, 13).

6. Palier à roulement à contact oblique selon au moins la revendication 1, **caractérisé en ce que** l'élément de connexion (18) est réalisé sous forme de bague d'une seule pièce ou divisée (23).

7. Palier à roulement à contact oblique selon au moins l'une quelconque des revendications 1 à 5, **caractérisé en ce que** l'élément de connexion (18) se compose d'une pluralité de barres (26) qui sont chacune connectées par engagement par correspondance de formes aux bagues individuelles (12, 13).

8. Palier à roulement à contact oblique selon au moins la revendication 1, **caractérisé en ce que** l'élément de crochet (21) est réalisé sous forme de bord (27) saillant radialement vers l'intérieur ou sous forme de boulon fileté (25).

9. Palier à roulement à contact oblique selon au moins la revendication 1, **caractérisé en ce que** l'élément de connexion (18) est réalisé sous forme d'élément d'espacement de telle sorte qu'une distance axiale entre les bagues individuelles (12, 13) soit créée par l'élément de connexion (18) connecté par engagement par correspondance de formes aux bagues individuelles (12, 13).

10. Palier à roulement à contact oblique selon au moins la revendication 1, **caractérisé en ce que** les deux bagues individuelles (12, 13) sont réalisées sous forme symétrique de telle sorte qu'une rainure (20, 22, 30, 33, 36) soit fraisée dans l'épaulement (16, 17) d'une bague individuelle (12, 13), laquelle rainure correspond à la rainure (20, 22, 30, 33, 36) de l'autre bague individuelle (12, 13).

11. Palier à roulement à contact oblique selon au moins la revendication 1, **caractérisé en ce que** la rainure (20, 22, 30, 33, 36) d'une bague individuelle (12, 13) a une plus grande largeur axiale que la rainure (20, 22, 30, 33, 36) de l'autre bague individuelle (12, 13).

12. Palier à roulement à contact oblique selon au moins la revendication 1, **caractérisé en ce qu'**une bague d'espacement (32) est disposée entre les bagues individuelles (12, 13) de la bague de palier extérieure (2).

13. Palier à roulement à contact oblique selon au moins la revendication 1, **caractérisé en ce que** le palier à roulement à contact oblique est réalisé sous forme de palier à rouleaux coniques (1) et peut être utilisé comme palier fixe d'un support sur palier principal de rotor d'une éolienne.
